# EUROPEAN PATENT APPLICATION

(11) **EP 3 650 481 A1**
(43) Date of publication of application: **13.05.2020**
(21) Application number: 18828011.9
(22) Date of filing: 14.06.2018
(51) Int. Cl.: C08G 18/28, D01D 5/04, D04H 1/4326, D04H 1/728

(54) **RESIN, RESIN COMPOSITION, NONWOVEN FABRIC USING SAME, FIBER PRODUCT, SEPARATOR, SECONDARY BATTERY, AND METHOD FOR PRODUCING ELECTRIC DOUBLE LAYER CAPACITOR AND NONWOVEN FABRIC**

(30) Priority: 03.07.2017 JP 2017130082
(71) Applicant: Toray Industries, Inc., Tokyo 103-8666 (JP)
(72) Inventor: CHAYAMA, Natsuko, Otsu-shi Shiga 520-8558 (JP); YUBA, Tomoyuki, Otsu-shi Shiga 520-8558 (JP)
(74) Representative: Kador & Partner PartG mbB
(86) International application number: PCT/JP2018/022670
(87) International publication number: WO 2019/009037

(57) **Abstract**

A problem addressed by the present invention is to provide a resin out of which a heat-resistant non-woven fabric having a fine fiber diameter can be made by an electrospinning method. A main object of the present invention is to provide a resin, including a structure(s) represented by at least one selected from the group consisting of the following general formulae (1) to (3), wherein an end of the main-chain of the resin has at least one selected from alkyl groups having 10 or more carbon atoms and fluoroalkyl groups having 4 or more carbon atoms; 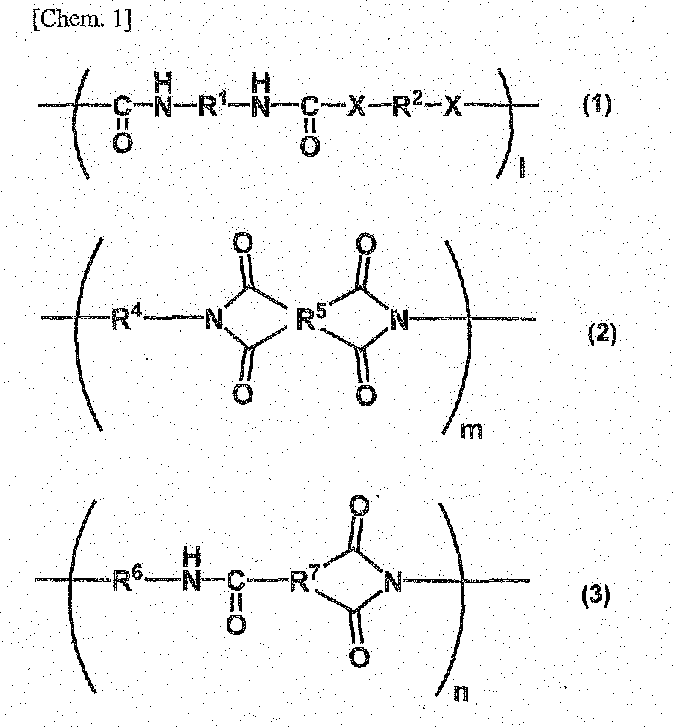 (wherein, in the general formula (1), X independently represents a single bond or - NR³-; R¹ and R² independently represent a C₄-C₃₀ bivalent organic group; R³ represents a hydrogen atom or a C₁-C₁₀ monovalent organic group; in the general formula (2), R⁴ represents a C4-C₃₀ bivalent organic group; R⁵ represents a C₄-C₃₀ tetravalent organic group; in the general formula (3), R⁶ represents a C₄-C₃₀ bivalent organic group; R⁷ represents a C₄-C₃₀ trivalent organic group; l, m, and n are each an integer of 0 or greater with the proviso that l + m + n = 10 or greater; and wherein the structures represented by the general formulae (1) to (3) do not necessarily need to be consecutively present.)

## Description

### TECHNICAL FIELD

The present invention relates to resins and resin compounds, to non-woven fabrics produced using the same, and also to applications of the same, wherein the resins and resin compounds can suitably be used particularly in applications for separators and electric double layer capacitors.

### BACKGROUND ART

Lithium-ion batteries are rechargeable high-capacity batteries and thus enable electronic equipment to have higher performance and operate for a long time. Furthermore, lithium-ion batteries are mounted in automobiles and the like, and expected to be promising as batteries for hybrid vehicles and electric automobiles.

Lithium-ion batteries that are currently used widely have a separator made using a porous polyolefin film. If the battery temperature becomes excessively high, however, the separator will shrink or melt, unfavorably causing shorting between the electrodes.

In view of this, disclosed is a separator in which a porous layer composed of a heat-resistant resin composite or a heat-resistant particle composite is formed on one face or both faces of a porous polyolefin film (see, for example, Patent Literature 1 and 2).

In addition, proposed is a separator made using a non-woven fabric obtained by electrospinning a polyimide, which is a heat-resistant resin (see, for example, Patent Literature 3). Electrospinning is a technique in which a voltage is applied to a polymer solution being fed, thus causing charge repulsion to break up the solution to obtain a non-woven fabric composed of a polymer fiber.

### Citation List

### Patent Literature

Patent Literature 1: JP 2007-299612 A
Patent Literature 2: JP 2009-205958 A
Patent Literature 3: WO 2016/056480

### SUMMARY OF INVENTION

### Technical Problem

However, such a technology as described in Patent Literature 1 and 2 causes the formation of a heat-resistant layer to make the separator thick. A lithium-ion battery made using this separator has a problem of decreased volume energy density.

On the other hand, a separator obtained using a method disclosed in Patent Literature 3 can achieve high heat resistance without forming a heat-resistant layer. However, a nitrogen-containing heat-resistant resin such as polyimide has high polarity, and a solution of the resin has large surface tension. Thus, the breakup of the solution is suppressed during electrospinning, and the solution tends not to break up sufficiently by the time when the solution is deposited on a substrate. The insufficient breakup of the solution results in only a non-woven fabric having a large fiber diameter, and causes the pore size to be larger, and thus, the separator fails to carry out a function that prevents shorting.

In view of such problems, an object of the present invention is to provide a resin out of which a heat-resistant non-woven fabric having a fine fiber diameter can be made by an electrospinning method.

### Solution to Problem

The present invention is a resin containing a structure(s) represented by at least one selected from the group consisting of the following general formulae (1) to (3), wherein an end of the main-chain of the resin has at least one selected from the group consisting of alkyl groups having 10 or more carbon atoms and fluoroalkyl groups having 4 or more carbon atoms. The present invention also encompasses various aspects in which such a resin is used.

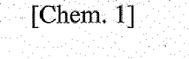

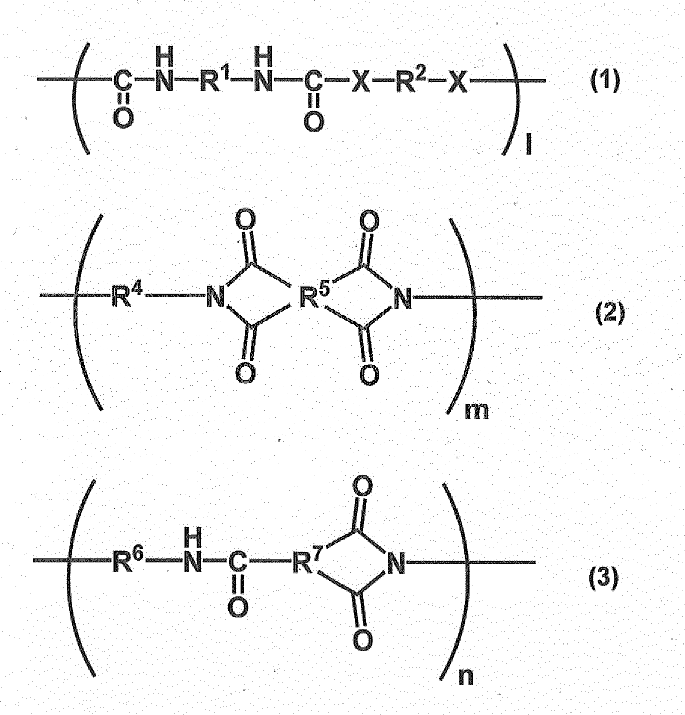

(In the general formula (1), X independently represents a single bond or -NR³-; R¹ and R² independently represent a C₄-C₃₀ bivalent organic group; R³ represents a hydrogen atom or a C₁-C₁₀ monovalent organic group; in the general formula (2), R⁴ represents a C₄-C₃₀ bivalent organic group; R⁵ represents a C₄-C₃₀ tetravalent organic group; in the general formula (3), R⁶ represents a C₄-C₃₀ bivalent organic group; R⁷ represents a C₄-C₃₀ trivalent organic group; and 1, m, and n are each an integer of 0 or greater with the proviso that l + m + n = 10 or greater.)

### Advantageous Effects of Invention

The present invention makes it possible to obtain a resin out of which a heat-resistant non-woven fabric having a fine fiber diameter can be made by an electrospinning method.

### DESCRIPTION OF EMBODIMENTS

Below, preferred embodiments of a resin, a resin compound, a non-woven fabric, a method of producing the non-woven fabric, a fiber product, a separator, a secondary battery, and an electric double layer capacitor according to the present invention will be described in detail. It should be noted that the present invention should not be construed as limited to these embodiments.

### <Resin>

A resin according to an embodiment of the present invention is a resin containing a structure(s) represented by at least one selected from the group consisting of the following general formulae (1) to (3), wherein an end of the main-chain of the resin has at least one selected from the group consisting of alkyl groups having 10 or more carbon atoms and fluoroalkyl groups having 4 or more carbon atoms.

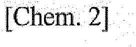

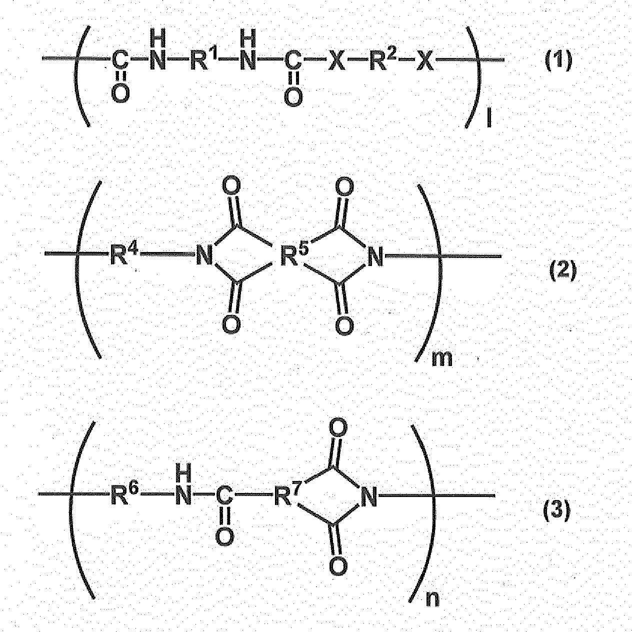

(In the general formula (1), X independently represents a single bond or -NR³-; R¹ and R² independently represent a C₄-C₃₀ bivalent organic group; R³ represents a hydrogen atom or a C₁-C₁₀ monovalent organic group; in the general formula (2), R⁴ represents a C₄-C₃₀ bivalent organic group; R⁵ represents a C₄-C₃₀ tetravalent organic group; in the general formula (3), R⁶ represents a C₄-C₃₀ bivalent organic group; R⁷ represents a C₄-C₃₀ trivalent organic group; and 1, m, and n are each an integer of 0 or greater with the proviso that l + m + n = 10 or greater.)

One or more structures represented by the general formulae (1) to (3) may be contained in one molecule of the resin. In addition, the total number of structures represented by the general formulae (1) to (3) contained in one molecule of the resin is 10 or greater on the average. In addition, that one molecule contains only one of the structures represented by the general formulae (1) to (3) means that two out of 1, m, and n are each zero. In the present invention, an aspect in which m and n are each zero is desirable.

In this regard, a resin according to the present invention can be used in the form of a mixture. That is, a mixture of a plurality of resins according to the present invention can be used.

The structure represented by the general formula (1) has a polyurea backbone or a polyamide backbone. The structure represented by the general formula (2) has a polyimide backbone. The structure represented by the general formula (3) has a polyamideimide backbone. These are all backbones capable of achieving high heat resistance.

Among others, from the view point of maintaining heat resistance, the resin according to the present invention preferably contains, in particular, a structure(s) represented by at least one selected from the group consisting of the general formulae (1) to (3) in an amount of 50 mol% or more of all structures. That is, 50 mol% or more of all repeating units constituting the main-chain of the resin preferably have a structure(s) selected from the group consisting of (1) to (3). The resin more preferably contains a structure(s) represented by at least one selected from the group consisting of the general formulae (1) to (3) in an amount of 80 mol% or more, and is still more preferably a resin substantially having a structure(s) represented by at least one selected from the general formulae (1) to (3), that is, a resin in which all repeating units constituting the main-chain except the ends have a structure(s) selected from the group consisting of the general formulae (1) to (3).

A resin having a structure represented by the general formula (1) can be obtained by polycondensation between any kind of diisocyanate and a diamine, a dicarboxylic acid, or a compound having both an amino group and a carboxylic acid. The diamine, the dicarboxylic acid, and the compound having both an amino group and a carboxylic acid may each be allowed to react singly with a diisocyanate, or a mixture of two or more of them may be allowed to react with a diisocyanate. The reaction between the amino group and the isocyanate enables a structure wherein X is -NR³- to be obtained, and the reaction between the carboxylic acid and the isocyanate enables a structure wherein X is a single bond to be obtained.

Furthermore, the structure wherein X is -NR³- in the general formula (1) is more unlikely to undergo hydrolysis, and thus, is more preferable.

R¹ in the general formula (1) is not limited to any particular group as long as it is a C₄-C₃₀ bivalent organic group, and may be a C₄-C₃₀ bivalent aliphatic hydrocarbon group, which is less likely to cause a reaction between isocyanates as a side reaction, and thus, results in forming a straight-chain polymer and affording a non-woven fabric having a fine fiber diameter. In particular, a C₄-C₃₀ bivalent cyclic aliphatic hydrocarbon group is preferable.

Examples of C₄-C₃₀ bivalent chain aliphatic hydrocarbon groups include groups resulting from removing two hydrogen atoms form butane, pentane, hexane, heptane, oxane, nonane, decane, or undecane. Additional examples include the same groups as these with the proviso that part of the single bonds is/are substituted with an unsaturated bond(s), or that part of the hydrogen atoms is/are substituted with a hydrocarbon group(s).

Examples of C₄-C₃₀ bivalent cyclic aliphatic hydrocarbon groups include groups resulting from removing two hydrogen atoms form cyclobutane, cyclopentane, cyclohexane, cycloheptane, cyclooxane, cyclononane, cyclodecane, cycloundecane, cyclododecane, norbornane, or adamantane. Additional examples include the same groups as these with the proviso that part of the single bonds is/are substituted with an unsaturated bond(s), or that part of the hydrogen atoms is/are substituted with a hydrocarbon group(s).

R² in the general formula (1) represents a residue of a diamine, a dicarboxylic acid, or a compound having both an amino group and a carboxyl group. R² is not limited to any particular group as long as it is a C₄-C₃₀ bivalent organic group. R² preferably contains an aromatic ring. This can enhance the heat resistance of the resin. From the viewpoint of suppressing precipitation of a resin during storage and during spinning and the viewpoint of obtaining a non-woven fabric having a fine fiber diameter, R² preferably has one aromatic ring or two aromatic rings bonded to each other via an organic group. R² is particularly preferably a group represented by the following general formula (4) or (5).

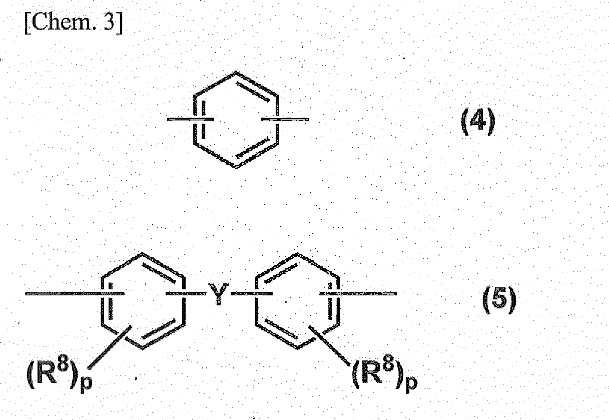

In the general formula (5), Y represents a single bond, methylene group, isopropylidene group, hexafluoroisopropylidene group, carbonyl group, sulfonyl group, ether bond, or thioether bond; R⁸ independently represents a hydroxyl group, carboxyl group, trifluoromethyl group, halogen atom, or C₁-C₁₀ hydrocarbon group; and p independently represents an integer of 0 to 4.

Examples of groups represented by the general formula (4) or (5) include, but are not particularly limited to, groups resulting from removing two hydrogen atoms from benzene, biphenyl, diphenyl methane, 2,2-diphenyl propane, hexafluoro-2,2-diphenyl propane, diphenyl ketone, diphenyl sulfone, diphenyl ether, or diphenyl sulfide. Additional examples include the same groups as these with the proviso that part of the hydrogen atoms of the aromatic ring is/are substituted with a hydroxyl group(s), carboxyl group(s), trifluoromethyl group(s), halogen atom(s), or C₁-C₁₀ hydrocarbon group(s).

In the general formula (1), R³ represents a C₁-C₁₀ monovalent organic group. Specific examples include a methyl group, ethyl group, propyl group, butyl group, pentyl group, hexyl group, heptyl group, octyl group, nonyl group, decyl group, and the like. Additional examples include the same groups as these with the proviso that part of the regioisomers or the single bonds is/are substituted with an unsaturated bond(s).

Examples of diisocyanates include: aliphatic diisocyanates such as butane diisocyanate and hexane diisocyanate; cyclic aliphatic diisocyanates such as isophorone diisocyanate, norbornane diisocyanate, 1,4-cyclohexane diisocyanate, and 1,3-cyclohexane diisocyanate; aromatic diisocyanates such as 1,3-phenylene diisocyanate, 1,4-phenylene diisocyanate, 2,4-toluene diisocyanate, 2,6-toluene diisocyanate, 4,4'-diphenyl methane diisocyanate, and 1,5-diisocyanate naphthalene. These can be used singly or in mixture of two or more kinds thereof.

Use of an aliphatic diisocyanate is less likely to cause a reaction between isocyanates as a side reaction, and thus, results in forming a straight-chain polymer and affording a non-woven fabric having a fine fiber diameter. Among others, a C₄-C₃₀ bivalent cyclic aliphatic diisocyanate is preferably used.

Examples of diamines that can be widely used include primary amines and secondary amines that are aliphatic compounds, cyclic aliphatic compounds, or aromatic compounds. In particular, use of a compound containing an aromatic ring can enhance the heat resistance of the resin. From the viewpoint of maintaining the solubility of the resin in a solvent, a preferable compound is one which has one aromatic ring or two aromatic rings bonded to each other via a bivalent organic group or a linking group such as an ether bond. A compound having a residue represented by the general formula (4) or (5) is particularly preferable.

With respect to a bivalent organic group containing an aromatic ring and represented by the above-mentioned general formula (4) or (5), examples of diamines that give a diamine residue include, but are not particularly limited to, para-phenylenediamine, meta-phenylenediamine, benzidine, 2,2-bis(3-amino-4-hydroxyphenyl)propane, 2,2-bis(3-amino-4-hydroxyphenyl)hexafluoropropane, 3,3-diaminobenzophenone, 4,4-diaminobenzophenone, 3,3'-diaminodiphenyl ether, 4,4'-diaminodiphenyl ether, 3,4'-diaminodiphenyl ether, 4,4'-diaminodiphenyl methane, 3,3'-diaminodiphenyl sulfone, 4,4'-diaminodiphenyl sulfone, 3,3'-diaminodiphenyl sulfide, 4,4'-diaminodiphenyl sulfide, and the like. Additional examples of compounds to be used include the same compounds as these with the proviso that one to four hydrogen atoms is/are each substituted with a hydroxyl group(s), carboxyl group(s), trifluoromethyl group(s), or halogen atom(s), or that one of the two hydrogen atoms on a nitrogen atom is substituted with a C₁-C₁₀ organic group. These can be used singly or in mixture of two or more kinds thereof.

Examples of dicarboxylic acids that can be widely used include dicarboxylic acids that are aliphatic compounds, cyclic aliphatic compounds, or aromatic compounds. In particular, use of a compound containing an aromatic ring can enhance the heat resistance of the resin, and thus, is more preferable. From the viewpoint of suppressing precipitation of a resin during storage and during spinning and the viewpoint of obtaining a non-woven fabric having a fine fiber diameter, such a compound preferably has one aromatic ring or two aromatic rings bonded to each other via an organic group, and particularly preferably has a residue represented by the above-mentioned general formula (4) or (5).

Among bivalent organic groups, R²s, having an aromatic ring and represented by the above-mentioned general formula (4) or (5), examples of dicarboxylic acids that give a dicarboxylic acid residue include, but are not particularly limited to, an isophthalic acid, terephthalic acid, methylene disalicylic acid, 2,2-bis(4-carboxyphenyl)propane, 2,2-bis(4-carboxyphenyl)hexafluoropropane, benzophenone-4,4'-dicarboxylic acid, 4,4'-dicarboxydiphenyl ether, 4,4'-dicarboxydiphenyl sulfone, 5,5'-thiodisalicylic acid, and the like. Additional examples include the same compounds as these with the proviso that one to four hydrogen atoms is/are each substituted with a hydroxyl group(s), carboxyl group(s), trifluoromethyl group(s), or halogen atom(s), or that one of the two hydrogen atoms on the nitrogen atom is substituted with a C₁-C₁₀ organic group. These can be used singly or in mixture of two or more kinds thereof.

A resin having a structure represented by the general formula (2) can be obtained by polycondensation between a derivative of a tetracarboxylic acid and a single diamine or diisocyanate or a mixture of two or more kinds of diamines and/or diisocyanates.

R⁴ in the general formula (2) represents a diamine residue. R⁴ is not limited to any particular group as long as it is a C₄-C₃₀ bivalent organic group. R⁴ preferably contains an aromatic ring. This can enhance the heat resistance of the resin. From the viewpoint of suppressing precipitation of a resin during storage and during spinning and the viewpoint of obtaining a non-woven fabric having a fine fiber diameter, R⁴ preferably has one aromatic ring or two aromatic rings bonded to each other via a bivalent organic group or a linking group such as an ether bond. R⁴ is particularly preferably a group represented by the following general formula (6) or (7).

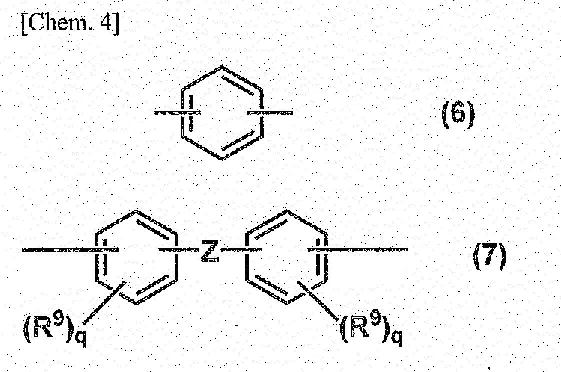

In the general formula (7), Y represents a single bond, methylene group, isopropylidene group, hexafluoroisopropylidene group, carbonyl group, sulfonyl group, ether bond, or thioether bond; R⁹ independently represents a hydroxyl group, carboxyl group, trifluoromethyl group, halogen atom, or C₁-C₁₀ hydrocarbon group; and q independently represents an integer of 0 to 4.

Examples of groups represented by the general formula (6) or (7) include, but are not particularly limited to, groups resulting from removing two hydrogen atoms from benzene, biphenyl, diphenyl methane, 2,2-diphenyl propane, hexafluoro-2,2-diphenyl propane, diphenyl ketone, diphenyl sulfone, diphenyl ether, or diphenyl sulfide. Additional examples include the same groups as these with the proviso that part of the hydrogen atoms of the aromatic ring is/are substituted with a hydroxyl group(s), carboxyl group(s), trifluoromethyl group(s), halogen atom(s), or C₁-C₁₀ hydrocarbon group(s).

Examples of diamines that can be widely used include primary amines and secondary amines that are aliphatic, cyclic aliphatic, or aromatic compounds. In particular, use of a compound containing an aromatic ring can enhance the heat resistance of the resin. From the viewpoint of suppressing precipitation of a resin during storage and during spinning and the viewpoint of obtaining a non-woven fabric having a fine fiber diameter, the number of aromatic rings is preferably one or two. A diamine having a residue represented by the above-mentioned general formula (6) or (7) is particularly preferable.

With respect to a bivalent organic group containing an aromatic ring and represented by the above-mentioned general formula (6) or (7), examples of diamines that give a diamine residue include, but are not particularly limited to, para-phenylenediamine, meta-phenylenediamine, benzidine, 2,2-bis(3-amino-4-hydroxyphenyl)propane, 2,2-bis(3-amino-4-hydroxyphenyl)hexafluoropropane, 3,3-diaminobenzophenone, 4,4-diaminobenzophenone, 3,3'-diaminodiphenyl ether, 4,4'-diaminodiphenyl ether, 3,4'-diaminodiphenyl ether, 4,4'-diaminodiphenylmethane, 3,3'-diaminodiphenyl sulfone, 4,4'-diaminodiphenyl sulfone, 3,3'-diaminodiphenyl sulfide, 4,4'-diaminodiphenyl sulfide, and the like. Additional examples of compounds to be used include the same compounds as these with the proviso that one to four hydrogen atoms is/are each substituted with a hydroxyl group(s), carboxyl group(s), trifluoromethyl group(s), or halogen atom(s), or that one of the two hydrogen atoms on a nitrogen atom is substituted with a C₁-C₁₀ organic group. These can be used singly or in mixture of two or more kinds thereof.

Examples of tetracarboxylic dianhydrides that can be widely used include tetracarboxylic dianhydrides that are aliphatic compounds, cyclic aliphatic compounds, or aromatic compounds.

Examples of tetracarboxylic dianhydride include, but are not particularly limited to, dianhydrides of: aromatic tetracarboxylic acids such as pyromellitic acid, 3,3',4,4'-biphenyltetracarboxylic acid, 2,3,3',4'-biphenyltetracarboxylic acid, 2,2',3,3'-biphenyltetracarboxylic acid, 3,3',4,4'-benzophenonetetracarboxylic acid, 2,2',3,3'-benzophenonetetracarboxylic acid, 2,2-bis(3,4-dicarboxyphenyl)hexafluoropropane, 2,2-bis(2,3-dicarboxyphenyl)hexafluoropropane, 1,1-bis(3,4-dicarboxyphenyl)ethane, 1,1-bis(2,3-dicarboxyphenyl)ethane, bis(3,4-dicarboxyphenyl)methane, bis(2,3-dicarboxyphenyl)methane, bis(3,4-dicarboxyphenyl)sulfone, bis(3,4-dicarboxyphenyl)ether, 1,2,5,6-naphthalenetetracarboxylic acid, 2,3,6,7-naphthalenetetracarboxylic acid, 2,3,5,6-pyridinetetracarboxylic acid, and 3,4,9,10-perylenetetracarboxylic acid; aliphatic tetracarboxylic acids such as cyclobutane tetracarboxylic acid, 1,2,3,4-cyclopentanetetracarboxylic acid, cyclohexanetetracarboxylic acid, bicyclo[2.2.1.]heptane tetracarboxylic acid, bicyclo[3.3.1.]tetracarboxylic acid, bicyclo [3.1.1.]hepto-2-ene tetracarboxylic acid, bicyclo[2.2.2.]octanetetracarboxylic acid, and adamantanetetracarboxylic acid; and the like. These can be used singly or in mixture of two or more kinds thereof.

A resin having a structure represented by the general formula (3) can be obtained by polycondensation between a derivative of a tricarboxylic acid and a single diamine or diisocyanate or a mixture of two or more kinds of diamines and/or diisocyanates.

R⁶ in the general formula (3) represents a diamine residue. R⁶ is not limited to any particular group as long as it is a C₄-C₃₀ bivalent organic group. R⁶ preferably contains an aromatic ring. This can enhance the heat resistance of the resin. From the viewpoint of suppressing precipitation of a resin during storage and during spinning and the viewpoint of obtaining a non-woven fabric having a fine fiber diameter, R⁶ preferably has one aromatic ring or two aromatic rings bonded to each other via a bivalent organic group or a linking group such as an ether bond. R⁶ is particularly preferably a group represented by the following general formula (8) or (9).

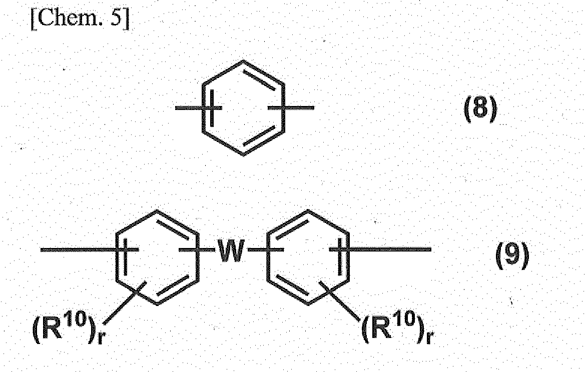

In the general formula (9), W represents a single bond, methylene group, isopropylidene group, hexafluoroisopropylidene group, carbonyl group, sulfonyl group, ether bond, or thioether bond; R¹⁰ independently represents a hydroxyl group, carboxyl group, trifluoromethyl group, halogen atom, or C₁-C₁₀ hydrocarbon group; and r independently represents an integer of 0 to 4.

Examples of groups represented by the general formula (8) or (9) include, but are not particularly limited to, groups resulting from removing two hydrogen atoms from benzene, biphenyl, diphenylmethane, 2,2-diphenylpropane, hexafluoro-2,2-diphenylpropane, diphenyl ketone, diphenyl sulfone, diphenyl ether, or diphenyl sulfide. Additional examples include the same groups as these with the proviso that part of the hydrogen atoms of the aromatic ring is substituted with a hydroxyl group(s), carboxyl group(s), trifluoromethyl group(s), halogen atom(s), or C₁-C₁₀ hydrocarbon group(s).

Examples of diamines that can be widely used include primary amines and secondary amines that are aliphatic, cyclic aliphatic, or aromatic compounds. In particular, use of a compound containing an aromatic ring can enhance the heat resistance of the resin. From the viewpoint of suppressing precipitation of a resin during storage and during spinning and the viewpoint of obtaining a non-woven fabric having a fine fiber diameter, the number of aromatic rings is preferably one or two. A diamine having a residue represented by the above-mentioned general formula (8) or (9) is particularly preferable.

With respect to a bivalent organic group containing an aromatic ring and represented by the above-mentioned general formula (8) or (9), examples of diamines that give a diamine residue include, but are not particularly limited to, para-phenylenediamine, meta-phenylenediamine, benzidine, 2,2-bis(3-amino-4-hydroxyphenyl)propane, 2,2-bis(3-amino-4-hydroxyphenyl)hexafluoropropane, 3,3-diaminobenzophenone, 4,4-diaminobenzophenone, 3,3'-diaminodiphenyl ether, 4,4'-diaminodiphenyl ether, 3,4'-diaminodiphenyl ether, 4,4'-diaminodiphenylmethane, 3,3'-diaminodiphenyl sulfone, 4,4'-diaminodiphenyl sulfone, 3,3'-diaminodiphenyl sulfide, 4,4'-diaminodiphenyl sulfide, and the like. Additional examples of compounds to be used include the same compounds as these with the proviso that one to four hydrogen atoms is/are each substituted with a hydroxyl group(s), carboxyl group(s), trifluoromethyl group(s), or halogen atom(s), or that one of the two hydrogen atoms on a nitrogen atom is substituted with a C₁-C₁₀ organic group. These can be used singly or in mixture of two or more kinds thereof.

Examples of tricarboxylic acids include trimellitic acid, 3,3',4-tricarboxybiphenyl, 3,4,4'-tricarboxybiphenyl, 3,3',4-tricarboxybiphenyl ether, 3,4,4'-tricarboxybiphenyl ether, and the like.

Tricarboxylic acids and tetracarboxylic acids can be used singly or in combination of two or more kinds thereof.

A resin according to an embodiment of the present invention has, at an end of the main-chain of the resin, at least one selected from the group consisting of alkyl groups having 10 or more carbon atoms and fluoroalkyl groups having 4 or more carbon atoms, and thus, a solution of the resin results in having small surface tension. As a result, the solution undergoes promoted breakup when spun by an electrospinning method, and affords a non-woven fabric having a finer fiber diameter. The upper limit of the carbon number of this alkyl group and fluoroalkyl group is preferably 25 or less as the carbon number of the alkyl group and preferably 10 or less as the carbon number of the fluoroalkyl group from the viewpoint of maintaining compatibility with a solvent.

Examples of C₁₀-C₂₅ alkyl groups include capryl (decyl) group, lauryl (dodecyl) group, myristyl (tetradecyl) group, pentadecyl group, palmityl (hexadecyl) group, margaryl (heptadecyl) group, stearyl group, vaccenyl (octadecyl) group, arachidyl (icosyl) group, behenyl (docosyl) group, lignoceryl (tetratetracosyl) group, and the like. Additional examples include regioisomers of these groups. In this regard, the same groups as these with the proviso that part of the single bonds is/are substituted with an unsaturated bond(s) are permissible as long as such groups do not impair the effects of the invention.

Examples of C₄-C₁₀ fluoroalkyl groups include perfluorobutyl group, perfluoropentyl group, perfluorohexyl group, perfluoroheptyl group, perfluorooctyl group, perfluorononyl group, perfluorodecyl group, and the like. Additional examples include regioisomers of these groups. Still additional examples include the same groups as these with the proviso that part of the fluorine atoms is/are substituted with a hydrogen atom(s), and the number of hydrogen atoms to be substituted is preferably 4 or less to maintain the effect of decreasing the surface tension of the solution. In this regard, the same groups as these with the proviso that part of the single bonds is/are substituted with an unsaturated bond(s) are permissible as long as such groups do not impair the effects of the invention.

A method of introducing, to an end of the main-chain, at least one selected from alkyl groups having 10 or more carbon atoms and fluoroalkyl groups having 4 or more carbon atoms is, for example, the below-mentioned method. In polycondensation, the amount of feed is set at a monomer ratio such that the isocyanate group of a monomer is in an excessive amount with respect to the diamine group or carboxylic group of another monomer. After polycondensation, a monoamine, monocarboxylic acid, or monovalent alcohol which has an alkyl group having 10 or more carbon atoms or a fluoroalkyl group having 4 or more carbon atoms is allowed to react with the excessive isocyanate group.

Examples of monoamines having an alkyl group having 10 or more carbon atoms include decylamine, undecylamine, tridecylamine, laurylamine, myristylamine, pentadecylamine, heptadecylamine, cetylamine, stearylamine, nonadecylamine, and the like. Additional examples include isomers of these compounds and also include the same compounds as these with the proviso that the alkyl group has an unsaturated bond, that a nitrogen atom of the amino group has a substituent, that a hydrogen atom of the alkyl group is substituted with a hydrocarbon group, a halogen atom, or a silyl group, or that one of the two hydrogen atoms on the nitrogen atom is substituted with a C₁-C₁₀ organic group. These can be used singly or in mixture of two or more kinds thereof.

Examples of monocarboxylic acids having an alkyl group having 10 or more carbon atoms include, but are not particularly limited to, a capric acid, lauric acid, myristic acid, pentadecylic acid, palmitic acid, palmitoleic acid, margaric acid, stearic acid, arachidic acid, behenic acid, lignoceric acid, nervonic acid, cerotinic acid, and the like. Additional examples include isomers of these compounds and also include the same compounds as these with the proviso that the alkyl group has an unsaturated bond, or that a hydrogen atom of the alkyl group is substituted with a hydrocarbon group, a halogen atom, or a silyl group. These can be used singly or in mixture of two or more kinds thereof.

Examples of monovalent alcohols having an alkyl group having 10 or more carbon atoms include, but are not particularly limited to, decanol, undecyl alcohol, lauryl alcohol, tridecyl alcohol, myristyl alcohol, pentadecyl alcohol, cetanol, heptadecanol, stearyl alcohol, nonadecyl alcohol, arachidyl alcohol, heneicosanol, behenyl alcohol, erucyl alcohol, lignoceryl alcohol, ceryl alcohol, heptacosanol, montanyl alcohol, nonacosanol, and the like. Additional examples include isomers of these compounds and also include the same compounds as these with the proviso that the alkyl group has an unsaturated bond, or that a hydrogen atom of the alkyl group is substituted with a hydrocarbon group, a halogen atom, or a silyl group. These can be used singly or in mixture of two or more kinds thereof.

Examples of monoamines, monocarboxylic acids, or monovalent alcohols that have a fluoroalkyl group having 4 or more carbon atoms include, but are not particularly limited to, 1H,1H-perfluorobutylamine, 1H,1H-perfluorohexylamine, 1H,1H-tridecafluoroheptylamine, perfluoropentanoic acid, perfluorohexanoic acid, perfluoroheptanoic acid, perfluorooctanoic acid, perfluorononanoic acid, perfluorodecanoic acid, 2H,2H,3H,3H-perfluoroundecanoic acid, 2-perfluorooctyl ethanol, 2-perfluorobutylethanol, 2-perfluorohexylethanol, 1H,1H-perfluoro-1-dodecanol, 1H,1H,9H-hexadecafluorononanol, 1H,1H,9H-docafluoroheptanol, and the like. Additional examples include isomers of these compounds and also include the same compounds as these with the proviso that the alkyl group has an unsaturated bond, or that a hydrogen atom or a fluorine atom of the alkyl group is substituted with a hydrocarbon group, a halogen atom, or a silyl group. These can be used singly or in mixture of two or more kinds thereof.

Examples of monoisocyanates having an alkyl group having 10 or more carbon atoms include, but are not particularly limited to, dodecylisocyanate, octadecylisocyanate, and the like. Additional examples include isomers of these compounds and also include the same compounds as these with the proviso that the alkyl group has an unsaturated bond, or that a hydrogen atom of the alkyl group is substituted with a hydrocarbon group, a halogen atom, or a silyl group. These can be used singly or in mixture of two or more kinds thereof.

Examples of monoisocyanates having a fluoroalkyl group having 4 or more carbon atoms include, but are not particularly limited to, perfluorobutylisocyanate, perfluorphexylisocyanate, and the like. Additional examples include isomers of these compounds and also include the same compounds as these with the proviso that the alkyl group has an unsaturated bond, or that a hydrogen atom or a fluorine atom of the alkyl group is substituted with a hydrocarbon group, a halogen atom, or a silyl group. These can be used singly or in mixture of two or more kinds thereof.

Solvents used for polycondensation reaction are not limited to any particular ones as long as a produced resin is soluble in the solvents, and examples of such solvents that can be preferably used include: aprotic polar solvents such as N-methyl-2-pyrrolidone, N-methylcaprolactam, N,N-dimethylacetoamide, N,N-dimethylformamide, dimethylsulfoxide, γ-butyrolactone, and dimethylimidazoline; phenol-based solvents such as phenol, m-cresol, chlorophenol, and nitrophenol; phosphorus-based solvents such as polyphosphoric acid and phosphoric acid having phosphorus pentaoxide added thereto; and the like.

A resin obtained through polycondensation reaction may be used in a state where the resin is dissolved in a solvent, or may be put in water and the like followed by precipitating the resin, which is then dried and isolated as a solid, so that the solid can be used.

### <Resin Compound>

A resin according to the present invention is dissolved or dispersed in any solvent, so that the resin can be used as a resin compound. That is, a resin compound according to an embodiment of the present invention contains the above-mentioned resin and a solvent. In addition, the resin compound can optionally contain another component, for example, a filler such as organic particles or inorganic particles, a dissolving auxiliary agent, a charging auxiliary agent, an adhesion improving agent, a surfactant, and the like.

Examples of solvents used for a resin compound according to an embodiment of the present invention include, but are not particularly limited to:
ethers such as ethylene glycol monomethyl ether, ethylene glycol monoethyl ether, propylene glycol monomethyl ether, propylene glycol monoethyl ether, ethylene glycol dimethyl ether, ethylene glycol diethyl ether, ethylene glycol dibutyl ether, diethylene glycol diethyl ether, diethylene glycol dimethyl ether, and diethylene glycol methylethyl ether;
acetates such as ethylene glycol monoethyl ether acetate, propylene glycol monomethyl ether acetate, propyl acetate, butyl acetate, isobutyl acetate, 3-methoxybutyl acetate, 3-methyl-3-methoxybutyl acetate, methyl lactate, ethyl lactate, and butyl lactate;
ketones such as acetylacetone, methylpropyl ketone, methylbutyl ketone, methylisobutyl ketone, cyclopentanone, and 2-heptanone; alcohols such as butyl alcohol, isobutyl alcohol, pentanol, 4-methyl-2-pentanol, 3-methyl-2-butanol, 3-methyl-3-methoxybutanol, and diacetone alcohol;
aromatic hydrocarbons such as toluene and xylene;
N-methyl-2-pyrrolidone, N-cyclohexyl-2-pyrrolidone, N,N-dimethylformamide, N,N-dimethylacetoamide, N,N-dimethylisobutylamide, dimethylsulfoxide, γ-butyrolactone, and water. Among others, at least one solvent or a mixture of solvents selected from the group consisting of N-methylpyrrolidone, N,N-dimethylacetoamide, and N,N-dimethylisobutylamide has good solubility for a resin and suitable volatility, and thus is preferable to obtain a non-woven fabric having a fine fiber diameter. These can be used singly or in mixture of two or more kinds thereof.

The solvent content is preferably 40 mass% or more with respect to the total mass of the compound from the viewpoint of preventing gelation of the solution. In addition, the solvent content is preferably 80 mass% or less in the same manner from the viewpoint of maintaining the heat resistance of the non-woven fabric.

### <Non-woven Fabric and Method of Producing Same>

A non-woven fabric according to an embodiment of the present invention contains the above-mentioned resin. The non-woven fabric preferably has a thermal shrinkage ratio of 10% or less from the viewpoint of suppressing a dimensional change under a high-temperature environment. The non-woven fabric more preferably has a thermal shrinkage ratio of 5% or less, still more preferably 3% or less.

The thermal shrinkage ratio mentioned here refers to a rate of change in the dimensions of a piece of the non-woven fabric, wherein the change is caused by heating the piece.

The non-woven fabric preferably has a fiber diameter of 3 µm or less, more preferably 1.5 µm or less, still more preferably 1 µm or less, from the viewpoint of making the non-woven fabric dense.

The fiber diameter mentioned here refers to the average taken from the fiber widths measured within a field of view of a microscope with which the non-woven fabric is observed.

A non-woven fabric according to an embodiment of the present invention can be obtained by spinning the above-mentioned resin compound that is melted or that is dissolved in a solvent. Use of an electrospinning method as a spinning method causes the breakup of the liquid during spinning, affords a non-woven fabric composed of a fiber having a finer fiber diameter, and thus, is preferable. That is, it is preferable to spin the above-mentioned resin compound using an electrospinning method to form a non-woven fabric.

The electrospinning method mentioned here refers to a spinning method in which a high voltage is applied to a polymer solution, and the charged polymer solution is sprayed to the earthed counter electrode to thereby obtain a nanofiber. Examples of electrospinning devices used in the present invention include, but are not particularly limited to: a device that discharges a polymer solution through a protruding nozzle similar to the syringe of an injector; a device that causes a thin film polymer solution formed on a rotary roller or ball to be electrically charged so that a nanofiber can be discharged through a discharge portion; and the like. When the solution is discharged with a voltage applied to the discharge portion, and if a piece of aluminium foil or release paper as a substrate is previously attached onto the earthed counter electrode, a non-woven fabric is deposited on the substrate.

### <Applications of Non-woven Fabric>

Non-woven fabrics according to embodiments of the present invention can suitably be used for: separators for power storage elements such as secondary batteries and electric double layer capacitors; and fiber products such as acoustic materials, electro-magnetic wave shielding materials, separation filters, and heat-resistant bag filters. In particular, the non-woven fabrics used as separators for power storage elements can serve as highly heat-resistant separators to enhance the safety of the electricity storage elements.

A secondary battery or electric double layer capacitor according to an embodiment of the present invention has the above-mentioned separator as a separator between a cathode and an anode. Such a secondary battery or electric double layer capacitor can be obtained by stacking a plurality of electrodes with the above-mentioned separator in between, placing the stack and an electrolyte solution in a exterior material such as a metal case, and sealing the exterior material.

### EXAMPLES

For more detailed explanation, the present invention will be more specifically described with reference to Examples, but the present invention is not construed as limited by these Examples. Here, resins and others were evaluated using the below-mentioned methods.

### (1) Production of Non-woven Fabric

Using an electrospinning device (NEU Nanofiber Electrospinning Unit, manufactured by Kato Tech Co., Ltd.), a resin solution was discharged at 40 µL/minute to form a non-woven fabric having an areal weight of 5g/m² on a piece of aluminium foil. As a nozzle, an 18-gauge non-beveled needle (having an inner diameter of 0.94 mm) was used, and the distance up to the collector was set to 15 cm. When a voltage was set, each sample at the tip of the nozzle was checked by visual observation so that the resin solution could stably maintain the shape of a cone (Taylor cone) at the tip of the nozzle. The obtained non-woven fabric on the aluminium foil was dried in vacuo at 150°C to remove the residual solvent. The obtained non-woven fabric was used for the below-mentioned evaluation.

### (2) Measurement of Fiber Diameter

The non-woven fabric specimen was sputtered with gold, and the resulting specimen was observed using a scanning electron microscope (SEM). Here, the acceleration voltage was 5 kV, and the magnification ratio was 10000×. From the field of view, 30 fibers were arbitrarily selected, and the average value of the diameters (µm) of the fibers was calculated.

### (3) Heat Resistance (Thermal Shrinkage Ratio) Evaluation

Each non-woven fabric specimen cut into a size of 10 cm × 2 cm was heated under pressurized air at 300°C for one hour in an inert oven (INH-9, manufactured by Koyo Thermo Systems Co., Ltd.). The dimension in the length direction was measured, and the ratio of the dimensional change by shrinkage to the original length (10 cm) was determined and regarded as a thermal shrinkage ratio (%).

### (4) Chemical Resistance Evaluation

Each non-woven fabric specimen cut into a size of 3 cm × 3 cm and 100 mL of aqueous solution of hydrochloric acid having a concentration of 2 mol/L were placed in a 500 mL beaker, and stored in a thermostatic chamber with a dish as a lid put on the beaker at 40°C for 3 days. After the storage, a non-woven fabric piece with no observed breakage was regarded as good, and a non-woven fabric piece with observed breakage was regarded as not good.

### (5) Preservation Stability Evaluation of Resin Solution

Each resin solution was stored indoors at a room temperature of 25°C for 90 days. Each solution was checked by visual observation during the storage. A solution in which no precipitation, gelation, or turbidity was observed for 90 days was regarded as "good". For a solution in which any of the changes was observed during the period of 90 days, the number of days taken until the change occurred was recorded.

### (6) Cycle Characteristics Evaluation

Each non-woven fabric piece was used to evaluate the cycle characteristics of a battery in accordance with the below-mentioned method. To measure the charge and discharge characteristics, an HS cell (manufactured by Hohsen Corp.) was used, and a lithium-ion battery was assembled under an argon atmosphere. A product (manufactured by Hohsen Corp.), a fired graphite-made active material is applied onto a copper foil piece to achieve 3.2 Ah/cm², was stamped into the shape of a circle having a diameter of 16 mm, and the resulting product was used as an anode. A piece obtained by stamping the non-woven fabric to have a diameter of 24 mm was used as a separator. A product (manufactured by Hohsen Corp.), a fired lithium cobaltate-made active material is applied onto an aluminum foil piece to achieve 3.0 Ah/cm², was stamped into a shape having a diameter of 16 mm, and the resulting product was used as a cathode. These were layered in order, and the resulting piece was infused with 1 ml of electrolyte LBG-00022 (manufactured by Kishida Chemical Co., Ltd.) and enclosed to obtain a battery cell for evaluation.

A battery cell for evaluation produced as above-mentioned was evaluated for charge and discharge using a charge and discharge measurement device (the product name "ACD-01 Charge And Discharge Testing Device", manufactured by Aska Electronic Co., Ltd.). The charge and discharge condition was that the battery cell was charged at a constant current of 6 mA until the battery voltage became 4.6 V; further charged at a constant voltage of 4.6 V until a total of two hours and 30 minutes had passed since the start of charging; stopped charge for 30 minutes; and then discharged at a constant current of 6 mA until the battery voltage became 2.7 V. This is one cycle. The charge and discharge cycle was repeated under the same condition to determine the number of cycles taken until the battery voltage became 2.3 V or less owing to internal shorting and caused an abnormal shutdown.

### Synthesis Example 1: Synthesis of Resin A-1

Under a dry nitrogen gas stream, 10.27 g (0.095 mol) of p-phenylenediamine (hereinafter referred to as PDA, manufactured by Fujifilm Wako Pure Chemical Corporation) was dissolved in 82.13 g of N,N-dimethylacetoamide (the product name "N,N-dimethylacetoamide (super dehydrated), hereinafter referred to as DMAc", manufactured by Fujifilm Wako Pure Chemical Corporation) in a flask. To the resulting mixture, 22.23 g (0.10 mol) of isophorone diisocyanate (the product name "Isophorone Diisocyanate (mixture of isomers)", hereinafter referred to as IPDI, manufactured by Tokyo Chemical Industry Co., Ltd.) was added little by little, and the resulting mixture was stirred for four hours with the flask dipped in an oil bath at 60°C. Then, 2.70 g (0.01 mol) of stearylamine (the product name "Stearylamine", manufactured by Tokyo Chemical Industry Co., Ltd.) was added to the mixture in the flask, and the resulting mixture was stirred for two hours with the flask in an oil bath at 60°C to obtain a DMAc solution of 30 mass% resin A-1. The resin A-1 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is a cyclic aliphatic hydrocarbon group; and R² corresponds to a structure represented by the general formula (4).

### Synthesis Example 2: Synthesis of Resin A-2

Under a dry nitrogen gas stream, 23.59 g (0.095 mol) of 3,3'-diaminodiphenyl sulfone (the product name "Bis(3-aminophenyl) Sulfone", hereinafter referred to as 3,3'-DDS, manufactured by Tokyo Chemical Industry Co., Ltd.) was dissolved in 113.19 g of DMAc in a flask. To the resulting mixture, 22.23 g (0.10 mol) of IPDI was added little by little, and the resulting mixture was stirred for four hours with the flask dipped in an oil bath at 60°C. Then, 2.70 g (0.01 mol) of stearylamine was added to the mixture in the flask, and the resulting mixture was stirred for two hours with the flask in an oil bath at 60°C to obtain a DMAc solution of 30 mass% resin A-2. The resin A-2 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is a cyclic aliphatic hydrocarbon group; and R² corresponds to a structure represented by the general formula (5).

### Synthesis Example 3: Synthesis of Resin A-3

Under a dry nitrogen gas stream, 10.27 g (0.095 mol) of PDA was dissolved in 77.55 g of DMAc in a flask. To the resulting mixture, 22.23 g (0.10 mol) of IPDI was added little by little, and the resulting mixture was stirred for four hours with the flask dipped in an oil bath at 60°C. Then, 0.73 g (0.01 mol) of butylamine (the product name "Butylamine", manufactured by Tokyo Chemical Industry Co., Ltd.) was added to the mixture in the flask, and the resulting mixture was stirred for two hours with the flask in an oil bath at 60°C to obtain a DMAc solution of 30 mass% resin A-3. The resin A-3 contains a structure represented by the general formula (1) in an amount of 50 mol% or more (substantially 100 mol%) with respect to all structures; an end of the main-chain has a C₄ alkyl group; X in the general formula (1) is a structure represented by -NH-; R¹ is a cyclic aliphatic hydrocarbon group; and R² corresponds to a structure represented by the general formula (4).

### Synthesis Example 4: Synthesis of Resin B-1

Under a dry nitrogen gas stream, 7.23 g (0.095 mol) of propylene glycol (hereinafter referred to as PG, manufactured by Nacalai Tesque, Inc.) and 22.23 g (0.10 mol) of IPDI were added to 75.02 g of DMAc in a flask, and, when the solution became uniform, 2.70 g (0.01 mol) of stearylamine was added. The resulting mixture was stirred for two hours with the flask dipped in an oil bath at 60°C, the temperature of the oil bath was raised to 120°C, and the mixture was stirred for four hours. The resulting mixture was diluted with a suitable amount of DMAc to obtain a DMAc solution of 30 mass% resin B-1. The resin B-1 does not contain a structure represented by the general formulae (1) to (3), and an end of the main-chain has a C₁₈ alkyl group.

### Synthesis Example 5: Synthesis of Resin A-4

Under a dry nitrogen gas stream, 10.27 g (0.095 mol) of PDA was dissolved in 82.02 g of DMAc in a flask. To the resulting mixture, 22.23 g (0.10 mol) of IPDI was added little by little, and the resulting mixture was stirred for four hours with the flask dipped in an oil bath at 60°C. Then, 2.65 g (0.01 mol) of 2-(perfluorobutyl)ethanol (the product name "1H,1H,2H,2H-Nonafluoro-1-hexanol", manufactured by Tokyo Chemical Industry Co., Ltd.) was added to the mixture in the flask, and the resulting mixture was stirred for two hours with the flask in an oil bath at 60°C to obtain a DMAc solution of 30 mass% resin A-4. The resin A-4 contains a structure represented by the general formula (1) in an amount of 50 mol% or more (substantially 100 mol%) with respect to all structures; an end of the main-chain has a C₆ fluoroalkyl group; X in the general formula (1) is a structure represented by - NH-; R¹ is a cyclic aliphatic hydrocarbon group; and R² corresponds to a structure represented by the general formula (4).

### Synthesis Example 6: Synthesis of Resin A-5

Under a dry nitrogen gas stream, 10.81 g (0.10 mol) of PDA was dissolved in 82.03 g of DMAc in a flask. To the resulting mixture, 21.12 g (0.095 mol) of IPDI was added little by little, and the resulting mixture was stirred for four hours with the flask dipped in an oil bath at 60°C. Then, 2.11 g (0.01 mol) of dodecyl isocyanate (the product name "Dodecyl Isocyanate", manufactured by Tokyo Chemical Industry Co., Ltd.) was added to the mixture in the flask, and the resulting mixture was stirred for two hours with the flask in an oil bath at 60°C to obtain a DMAc solution of 30 mass% resin A-5. The resin A-5 contains a structure represented by the general formula (1) in an amount of 50 mol% or more (substantially 100 mol%) with respect to all structures; an end of the main-chain has a C₁₂ alkyl group; X in the general formula (1) is a structure represented by -NH-; R¹ is a cyclic aliphatic hydrocarbon group; and R² corresponds to a structure represented by the general formula (4).

### Synthesis Example 7: Synthesis of Resin A-6

Under a dry nitrogen gas stream, 10.27 g (0.095 mol) of PDA was dissolved in 86.08 g of DMAc in a flask. To the resulting mixture, 22.23 g (0.10 mol) of IPDI was added little by little, and the resulting mixture was stirred for four hours with the flask dipped in an oil bath at 60°C. Then, 4.39 g (0.01 mol) of nonacosanoic acid (the product name "Nonacosanoic Acid", manufactured by Tokyo Chemical Industry Co., Ltd.) was added to the mixture in the flask, and the resulting mixture was stirred for two hours with the flask in an oil bath at 60°C to obtain a DMAc solution of 30 mass% resin A-6. The resin A-6 contains a structure represented by the general formula (1) in an amount of 50 mol% or more (substantially 100 mol%) with respect to all structures; an end of the main-chain has a C₂₉ alkyl group; X in the general formula (1) is a structure represented by -NH-; R¹ is a cyclic aliphatic hydrocarbon group; and R² corresponds to a structure represented by the general formula (4).

### Synthesis Example 8: Synthesis of Resin A-7

Under a dry nitrogen gas stream, 10.27 g (0.095 mol) of PDA was dissolved in 89.84 g of DMAc in a flask. To the resulting mixture, 22.23 g (0.10 mol) of IPDI was added little by little, and the resulting mixture was stirred for four hours with the flask dipped in an oil bath at 60°C. Then, 6.00 g (0.01 mol) of 1H,1H-perfluoro-1-dodecanol (the product name "1H,1H-Tricosafluoro-1-dodecanol", manufactured by Tokyo Chemical Industry Co., Ltd.) was added to the mixture in the flask, and the resulting mixture was stirred for two hours with the flask in an oil bath at 60°C to obtain a DMAc solution of 30 mass% resin A-7. The resin A-7 contains a structure represented by the general formula (1) in an amount of 50 mol% or more (substantially 100 mol%) with respect to all structures; an end of the main-chain has a C₁₂ fluoroalkyl group; X in the general formula (1) is a structure represented by-NH-; R¹ is a cyclic aliphatic hydrocarbon group; and R² corresponds to a structure represented by the general formula (4).

### Synthesis Example 9: Synthesis of Resin A-8

Under a dry nitrogen gas stream, 4.33 g (0.04 mol) of PDA and 4.18 g (0.055 mol) of PG were dissolved in 78.01 g of DMAc in a flask. To the resulting mixture, 22.23 g (0.10 mol) of IPDI was added little by little, and the resulting mixture was stirred for four hours with the flask dipped in an oil bath at 60°C. Then, 2.70 g (0.01 mol) of stearylamine was added to the mixture in the flask, and the resulting mixture was stirred for two hours with the flask in an oil bath at 60°C. Then, the temperature of the oil bath was raised to 120°C, and the mixture was stirred for four hours. The resulting mixture was diluted with a suitable amount of DMAc to obtain a DMAc solution of 30 mass% resin A-8. The resin A-8 contains a structure represented by the general formula (1) in an amount of 42 mol% with respect to all structures; an end of the main-chain has a C₁₈ alkyl group; X in the general formula (1) is a structure represented by -NH-; R¹ is a cyclic aliphatic hydrocarbon group; and R² corresponds to a structure represented by the general formula (4).

### Synthesis Example 10: Synthesis of Resin A-9

Under a dry nitrogen gas stream, 10.27 g (0.095 mol) of PDA was dissolved in 82.13 g of DMAc in a flask. To the resulting mixture, 22.23 g (0.10 mol) of diphenyl methane diisocyanate (the product name "Methylenediphenyl 4,4'-Diisocyanate", hereinafter referred to as MDI, manufactured by Tokyo Chemical Industry Co., Ltd.) was added little by little, and the resulting mixture was stirred for four hours with the flask dipped in an oil bath at 60°C. Then, 2.70 g (0.01 mol) of stearylamine was added to the mixture in the flask, and the resulting mixture was stirred for two hours with the flask in an oil bath at 60°C to obtain a DMAc solution of 30 mass% resin A-9. The resin A-9 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is an aromatic hydrocarbon group; and R² corresponds to a structure represented by the general formula (4).

### Synthesis Example 11: Synthesis of Resin A-1 0

Under a dry nitrogen gas stream, 10.27 g (0.095 mol) of PDA was dissolved in 69.51 g of DMAc in a flask. To the resulting mixture, 16.82 g (0.10 mol) of hexamethylene diisocyanate (the product name "Hexamethylene Diisocyanate", hereinafter referred to as HMDI, manufactured by Tokyo Chemical Industry Co., Ltd.) was added little by little, and the resulting mixture was stirred for four hours with the flask dipped in an oil bath at 60°C. Then, 2.70 g (0.01 mol) of stearylamine was added to the mixture in the flask, and the resulting mixture was stirred for two hours with the flask in an oil bath at 60°C to obtain a DMAc solution of 30 mass% resin A-10. The resin A-10 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is a chain aliphatic hydrocarbon group; and R² corresponds to a structure represented by the general formula (4).

### Synthesis Example 12: Synthesis of Resin A-11

Under a dry nitrogen gas stream, 11.04 g (0.095 mol) of hexamethylenediamine (hereinafter referred to as HMDA, manufactured by Fujifilm Wako Pure Chemical Corporation) was dissolved in 83.92 g of DMAc in a flask. To the resulting mixture, 22.23 g (0.10 mol) of IPDI was added little by little, and the resulting mixture was stirred for four hours with the flask dipped in an oil bath at 60°C. Then, 2.70 g (0.01 mol) of stearylamine was added to the mixture in the flask, and the resulting mixture was stirred for two hours with the flask in an oil bath at 60°C to obtain a DMAc solution of 30 mass% resin A-11. The resin A-11 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is a cyclic aliphatic hydrocarbon group; and R² contains no aromatic ring.

### Synthesis Example 13: Synthesis of Resin A-12

Under a dry nitrogen gas stream, 27.77 g (0.095 mol) of 1,3-bis(3-aminophenoxy)benzene (the product name "1,3-Bis(3-aminophenoxy)benzene", hereinafter referred to as APB-N, manufactured by Tokyo Chemical Industry Co., Ltd.) was dissolved in 122.96 g of DMAc in a flask. To the resulting mixture, 22.23 g (0.10 mol) of IPDI was added little by little, and the resulting mixture was stirred for four hours with the flask dipped in an oil bath at 60°C. Then, 2.70 g (0.01 mol) of stearylamine was added to the mixture in the flask, and the resulting mixture was stirred for two hours with the flask in an oil bath at 60°C to obtain a DMAc solution of 30 mass% resin A-12. The resin A-12 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is a cyclic aliphatic hydrocarbon group; and R² contains an aromatic ring but is a structure different from the general formulae (4) and (5).

### Synthesis Example 14: Synthesis of Resin A-13

Under a dry nitrogen gas stream, 16.08 g (0.055 mol) of APB-N and 4.33 g (0.040 mol) of PDA were dissolved in 105.77 g of DMAc in a flask. To the resulting mixture, 22.23 g (0.10 mol) of IPDI was added little by little, and the resulting mixture was stirred for four hours with the flask dipped in an oil bath at 60°C. Then, 2.70 g (0.01 mol) of stearylamine was added to the mixture in the flask, and the resulting mixture was stirred for two hours with the flask in an oil bath at 60°C to obtain a DMAc solution of 30 mass% resin A-13. The resin A-13 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is a cyclic aliphatic hydrocarbon group; and 42 mol% of R² corresponds to a structure represented by the general formulae (4) and (5).

### Synthesis Example 15: Synthesis of Resin C-1

Under a dry nitrogen gas stream, 11.03 g (0.095 mol) of isophthalic acid (the product name "Isophthalic Acid", hereinafter referred to as IPA, manufactured by Tokyo Chemical Industry Co., Ltd.) was dissolved in 83.90 g of DMAc in a flask. To the resulting mixture, 22.23 g (0.10 mol) of IPDI was added little by little, and, when the solution became uniform, 2.70 g (0.01 mol) of stearylamine was added. The resulting mixture was stirred for two hours with the flask dipped in an oil bath at 60°C, the temperature of the oil bath was raised to 160°C, and the mixture was stirred for four hours. The resulting mixture was diluted with a suitable amount of DMAc to obtain a DMAc solution of 30 mass% resin C-1. The resin C-1 contains a structure represented by the general formula (1) in an amount of 50 mol% or more (substantially 100 mol%) with respect to all structures; an end of the main-chain has a C₁₈ alkyl group; X in the general formula (1) is a structure represented by a single bond; R¹ is a cyclic aliphatic hydrocarbon group; and R² corresponds to a structure represented by the general formula (4).

### Synthesis Example 16: Synthesis of Resin C-2

Under a dry nitrogen gas stream, 11.03 g (0.095 mol) of IPA was dissolved in 79.32 g of DMAc in a flask. To the resulting mixture, 22.23 g (0.10 mol) of IPDI was added little by little, and, when the solution became uniform, 0.73 g (0.01 mol) of butylamine was added. The resulting mixture was stirred for two hours with the flask dipped in an oil bath at 60°C, the temperature of the oil bath was raised to 160°C, and the mixture was stirred for four hours. The resulting mixture was. diluted with a suitable amount of DMAc to obtain a DMAc solution of 30 mass% resin C-2. The resin C-2 contains a structure represented by the general formula (1) in an amount of 50 mol% or more (substantially 100 mol%) with respect to all structures; an end of the main-chain has a C₄ alkyl group; X in the general formula (1) is a structure represented by a single bond; R¹ is a cyclic aliphatic hydrocarbon group; and R² corresponds to a structure represented by the general formula (4).

### Synthesis Example 17: Synthesis of Resin C-3

Under a dry nitrogen gas stream, 4.65 g (0.040 mol) of IPA and 4.18 g (0.055 mol) of PG were dissolved in 78.76 g of DMAc in a flask. To the resulting mixture, 22.23 g (0.10 mol) of IPDI was added little by little, and, when the solution became uniform, 2.70 g (0.01 mol) of stearylamine was added. The resulting mixture was stirred for two hours with the flask dipped in an oil bath at 60°C, the temperature of the oil bath was raised to 160°C, and the mixture was stirred for four hours. The resulting mixture was diluted with a suitable amount of DMAc to obtain a DMAc solution of 30 mass% resin C-3. The resin C-3 contains a structure represented by the general formula (1) in an amount of 42 mol% with respect to all structures; an end of the main-chain has a C₁₈ alkyl group; X in the general formula (1) is a structure represented by a single bond; R¹ is a cyclic aliphatic hydrocarbon group; and R² corresponds to a structure represented by the general formula (4).

### Synthesis Example 18: Synthesis of Resin C-4

Under a dry nitrogen gas stream, 11.03 g (0.095 mol) of IPA was dissolved in 109.07 g of DMAc in a flask. To the resulting mixture, 25.03 g (0.10 mol) of MDI was added little by little, and, when the solution became uniform, 2.70 g (0.01 mol) of stearylamine was added. The resulting mixture was stirred for two hours with the flask dipped in an oil bath at 60°C, the temperature of the oil bath was raised to 160°C, and the mixture was stirred for four hours. The resulting mixture was diluted with a suitable amount of DMAc to obtain a DMAc solution of 30 mass% resin C-4. The resin C-4 contains a structure represented by the general formula (1) in an amount of 50 mol% or more (substantially 100 mol%) with respect to all structures; an end of the main-chain has a C₁₈ alkyl group; X in the general formula (1) is represented by a single bond; R¹ is an aromatic hydrocarbon group; and R² corresponds to a structure represented by the general formula (4).

### Synthesis Example 19: Synthesis of Resin C-5

Under a dry nitrogen gas stream, 11.03 g (0.095 mol) of IPA was dissolved in 89.92 g of DMAc in a flask. To the resulting mixture, 16.82 g (0.10 mol) of HMDI was added little by little, and, when the solution became uniform, 2.70 g (0.01 mol) of stearylamine was added. The resulting mixture was stirred for two hours with the flask dipped in an oil bath at 60°C, the temperature of the oil bath was raised to 160°C, and the mixture was stirred for four hours. The resulting mixture was diluted with a suitable amount of DMAc to obtain a DMAc solution of 30 mass% resin C-5. The resin C-5 contains a structure represented by the general formula (1) in an amount of 50 mol% or more (substantially 100 mol%) with respect to all structures; an end of the main-chain has a C₁₈ alkyl group; X in the general formula (1) is represented by a single bond; R¹ is a chain aliphatic hydrocarbon group; and R² corresponds to a structure represented by the general formula (4).

### Synthesis Example 20: Synthesis of Resin C-6

Under a dry nitrogen gas stream, 13.88 g (0.095 mol) of adipic acid (manufactured by Fujifilm Wako Pure Chemical Corporation) was dissolved in 90.55 g of DMAc in a flask. To the resulting mixture, 22.23 g (0.10 mol) of IPDI was added little by little, and, when the solution became uniform, 2.70 g (0.01 mol) of stearylamine was added. The resulting mixture was stirred for two hours with the flask dipped in an oil bath at 60°C, the temperature of the oil bath was raised to 160°C, and the mixture was stirred for four hours. The resulting mixture was diluted with a suitable amount of DMAc to obtain a DMAc solution of 30 mass% resin C-6. The resin C-6 contains a structure represented by the general formula (1) in an amount of 50 mol% or more (substantially 100 mol%) with respect to all structures; an end of the main-chain has a C₁₈ alkyl group; X in the general formula (1) is a structure represented by a single bond; R¹ is a cyclic aliphatic hydrocarbon group; and R² is a structure containing no aromatic ring.

### Synthesis Example 21: Synthesis of Resin C-7

Under a dry nitrogen gas stream, 20.54 g (0.095 mol) of 1,4-naphthalenetetracarboxylic acid (the product name "1,4-Naphthalenedicarboxylic Acid", hereinafter referred to as NTDCA, manufactured by Tokyo Chemical Industry Co., Ltd.) was dissolved in 106.08 g of DMAc in a flask. To the resulting mixture, 22.23 g (0.10 mol) of IPDI was added little by little, and, when the solution became uniform, 2.70 g (0.01 mol) of stearylamine was added. The resulting mixture was stirred for two hours with the flask dipped in an oil bath at 60°C, the temperature of the oil bath was raised to 160°C, and the mixture was stirred for four hours. The resulting mixture was diluted with a suitable amount of DMAc to obtain a DMAc solution of 30 mass% resin C-7. The resin C-7 contains a structure represented by the general formula (1) in an amount of 50 mol% or more (substantially 100 mol%) with respect to all structures; an end of the main-chain has a C₁₈ alkyl group; X in the general formula (1) is a structure represented by a single bond; R¹ is a cyclic aliphatic hydrocarbon group; and R² contains an aromatic ring but is a structure different from the general formula (4) or (5).

### Synthesis Example 22: Synthesis of Resin C-8

Under a dry nitrogen gas stream, 4.65 g (0.040 mol) of IPA and 11.89 g (0.055 mol) of NTDCA were dissolved in 96.74 g of DMAc in a flask. To the resulting mixture, 22.23 g (0.10 mol) of IPDI was added little by little, and, when the solution became uniform, 2.70 g (0.01 mol) of stearylamine was added. The resulting mixture was stirred for two hours with the flask dipped in an oil bath at 60°C, the temperature of the oil bath was raised to 160°C, and the mixture was stirred for four hours. The resulting mixture was diluted with a suitable amount of DMAc to obtain a DMAc solution of 30 mass% resin C-8. The resin C-8 contains a structure represented by the general formula (1) in an amount of 50 mol% or more (substantially 100 mol%) with respect to all structures; an end of the main-chain has a C₁₈ alkyl group; X in the general formula (1) is a structure represented by -NH-; R¹ is a cyclic aliphatic hydrocarbon group; and 42 mol% of R² corresponds to a structure represented by the general formula (4).

### Synthesis Example 23: Synthesis of Resin D-1

Under a dry nitrogen gas stream, 19.02 g (0.095 mol) of 4,4'-diaminodiphenyl ether (hereinafter referred to as ODA, manufactured by Wakayama Seika Kogyo Co., Ltd.) was dissolved in 123.06 g of N-methylpyrrolidone (hereinafter referred to as NMP, manufactured by Mitsubishi Chemical Corporation) in a flask. To the resulting mixture, 31.02 g (0.10 mol) of oxydiphthalic anhydride (hereinafter referred to as ODPA, manufactured by Manac Incorporated) was added, and the resulting mixture was stirred for two hours with the flask dipped in an oil bath at 40°C. Furthermore, 2.70 g (0.01 mol) of stearylamine was added to the mixture in the flask, the temperature of the oil bath was raised to 200°C, and the mixture was stirred for four hours. The resulting mixture was diluted with a suitable amount of NMP to obtain an NMP solution of 30 mass% resin D-1. The resin D-1 contains a structure represented by the general formula (2) in an amount of 50 mol% or more (substantially 100 mol%) with respect to all structures; an end of the main-chain has a C₁₈ alkyl group; and R⁴ corresponds to a structure represented by the general formula (7).

### Synthesis Example 24: Synthesis of Resin D-2

Under a dry nitrogen gas stream, 4.18 g (0.055 mol) of PG and 2.70 g (0.01 mol) of stearylamine were dissolved in 98.82 g of NMP in a flask. To the resulting mixture, 25.03 g (0.10 mol) of MDI was added, and the resulting mixture was stirred for two hours with the flask dipped in an oil bath at 60°C. Furthermore, 12.41 g (0.040 mol) of ODPA was added to the mixture in the flask, the temperature of the oil bath was raised to 160°C, and the mixture was stirred for four hours. The resulting mixture was diluted with a suitable amount of NMP to obtain an NMP solution of 30 mass% resin D-2. The resin D-2 contains a structure represented by the general formula (2) in an amount of 42 mol% with respect to all structures; an end of the main-chain has a C₁₈ alkyl group; and R⁴ corresponds to a structure represented by the general formula (7).

### Synthesis Example 25: Synthesis of Resin D-3

Under a dry nitrogen gas stream, 19.02 g (0.095 mol) of ODA was dissolved in 118.48 g ofNMP in a flask. To the resulting mixture, 31.02 g (0.10 mol) of ODPA was added, and the resulting mixture was stirred for two hours with the flask dipped in an oil bath at 40°C. Furthermore, 0.73 g (0.01 mol) of butylamine was added to the mixture in the flask, the temperature of the oil bath was raised to 200°C, and the mixture was stirred for four hours. The resulting mixture was diluted with a suitable amount of NMP to obtain an NMP solution of 30 mass% resin D-3. The resin D-3 contains a structure represented by the general formula (2) in an amount of 50 mol% or more (substantially 100 mol%) with respect to all structures; an end of the main-chain has a C₄ alkyl group; and R⁴ corresponds to a structure represented by the general formula (7).

### Synthesis Example 26: Synthesis of Resin D-4

Under a dry nitrogen gas stream, 27.77 g (0.095 mol) of APB-N was dissolved in 143.47 g ofNMP in a flask. To the resulting mixture, 31.02 g (0.10 mol) of ODPA was added, and the resulting mixture was stirred for two hours with the flask dipped in an oil bath at 40°C. Furthermore, 2.70 g (0.01 mol) of stearylamine was added to the mixture in the flask, the temperature of the oil bath was raised to 200°C, and the mixture was stirred for four hours. The resulting mixture was diluted with a suitable amount of NMP to obtain an NMP solution of 30 mass% resin D-4. The resin D-4 contains a structure represented by the general formula (2) in an amount of 50 mol% or more (substantially 100 mol%) with respect to all structures; an end of the main-chain has a C₁₈ alkyl group; and R⁴ contains an aromatic ring but is a structure different from a structure represented by the general formulae (6) and (7).

### Synthesis Example 27: Synthesis of Resin D-5

Under a dry nitrogen gas stream, 11.04 g (0.095 mol) of HMDA was dissolved in 104.43 g ofNMP in a flask. To the resulting mixture, 31.02 g (0.10 mol) of ODPA was added, and the resulting mixture was stirred for two hours with the flask dipped in an oil bath at 40°C. Furthermore, 2.70 g (0.01 mol) of stearylamine was added to mixture in the flask, the temperature of the oil bath was raised to 200°C, and the mixture was stirred for four hours. The resulting mixture was diluted with a suitable amount of NMP to obtain an NMP solution of 30 mass% resin D-5. The resin D-5 contains a structure represented by the general formula (2) in an amount of 50 mol% or more (substantially 100 mol%) with respect to all structures; an end of the main-chain has a C₁₈ alkyl group; and R⁴ is a structure containing no aromatic ring.

### Synthesis Example 28: Synthesis of Resin E-1

Under a dry nitrogen gas stream, 18.25 g (0.095 mol) of trimellitic anhydride (hereinafter referred to as TMA, manufactured by Fujifilm Wako Pure Chemical Corporation) was dissolved in 99.12 g of DMAC in a flask. To the resulting mixture, 2.70 g (0.01 mol) of stearylamine was added, and the resulting mixture was stirred for two hours with the flask dipped in an oil bath at 40°C. Furthermore, 11.32 g (0.065 mol) of 2,4-tolylene diisocyanate (hereinafter referred to as TDI, manufactured by Fujifilm Wako Pure Chemical Corporation) and 9.25 g (0.035 mol) of o-tolidine diisocyanate (the tradename "TODI", hereinafter referred to as TODI, manufactured by Nippon Soda Co., Ltd.) were added, and then, the temperature of the oil bath was raised to 160°C, and the mixture was stirred for four hours. The resulting mixture was diluted with a suitable amount of DMAc to obtain a DMAc solution of 30 mass% resin E-1. The resin E-1 contains a structure represented by the general formula (3) in an amount of 50 mol% or more (substantially 100 mol%) with respect to all structures; an end of the main-chain has a C₁₈ alkyl group; and R⁴ corresponds to a structure represented by the general formulae (8) and (9).

### Synthesis Example 29: Synthesis of Resin E-2

Under a dry nitrogen gas stream, 18.25 g (0.095 mol) of TMA was dissolved in 94.53 g of DMAc in a flask. To the resulting mixture, 0.73 g (0.01 mol) of butylamine was added, and the resulting mixture was stirred for two hours with the flask dipped in an oil bath at 40°C. Furthermore, 11.32 g (0.065 mol) of TDI and 9.25 g (0.035 mol) of TODI were added, the temperature of the oil bath was raised to 160°C, and the mixture was stirred for four hours. The resulting mixture was diluted with a suitable amount of DMAc to obtain a DMAc solution of 30 mass% resin E-2. The resin E-2 contains a structure represented by the general formula (3) in an amount of 50 mol% or more (substantially 100 mol%) with respect to all structures; an end of the main-chain has a C₄ alkyl group; and R⁴ corresponds to a structure represented by the general formulae (8) and (9).

### Synthesis Example 30: Synthesis of Resin E-3

Under a dry nitrogen gas stream, 4.18 g (0.055 mol) of PG and 2.70 g (0.01 mol) of stearylamine were dissolved in 119.28 g of DMAc in a flask. To the resulting mixture, 25.03 g (0.10 mol) of MDI was added, and the resulting mixture was stirred for two hours with the flask dipped in an oil bath at 60°C. Furthermore, 7.69 g (0.04 mol) of TMA was added, the temperature of the oil bath was raised to 160°C, and the mixture was stirred for four hours. The resulting mixture was diluted with a suitable amount of DMAc to obtain a DMAc solution of 30 mass% resin E-3. The resin E-2 contains a structure represented by the general formula (3) in an amount of 42 mol% with respect to all structures; an end of the main-chain has a C₁₈ alkyl group; and R⁴ is a structure represented by the general formula (9).

### Synthesis Example 31: Synthesis of Resin E-4

Under a dry nitrogen gas stream, 27.77 g (0.095 mol) of APB-N was dissolved in 100.22 g of NMP. Then, the flask was cooled on ice, and 21.06 g (0.10 mol) of anhydrous trimellitic chloride (hereinafter referred to as TAC, manufactured by Nippon Fine Chemical Co., Ltd.) dissolved in 20.00 g of NMP was added dropwise with the solution temperature kept at 30°C or less. All the contents were well mixed and allowed to react at 30°C for six hours. This solution was poured into 2 L of water, and the obtained precipitate was filtrated and washed with 1 L of water three times. The washed solid was dried in a ventilation oven for three days to obtain a solid resin E-4. This solid was dissolved in DMAc so that the solid content could be 30 mass%, to obtain a DMAc solution of 30% resin E-4. The resin E-4 contains a structure represented by the general formula (3) in an amount of 50 mol% or more (substantially 100 mol%) with respect to all structures; an end of the main-chain has a C₁₈ alkyl group; and R⁴ contains an aromatic ring but is a structure different from a structure represented by the general formulae (8) and (9).

### Synthesis Example 32: Synthesis of Resin E-5

Under a dry nitrogen gas stream, 15.98 g (0.095 mol) of HMDA was dissolved in 72.70 g of NMP. Then, the flask was cooled on ice, and 21.06 g (0.10 mol) of TAC dissolved in 20.00 g of NMP was added dropwise with the solution temperature kept at 30°C or less. All the contents were well mixed and allowed to react at 30°C for six hours. This solution was poured into 2 L of water, and the obtained precipitate was filtrated and washed with 1 L of water three times. The washed solid was dried in a ventilation oven for three days to obtain a solid resin E-5. This solid was dissolved in DMAc so that the solid content could be 30 mass%, to obtain a DMAc solution of 30 mass% resin E-5. The resin E-5 contains a structure represented by the general formula (3) in an amount of 50 mol% or more (substantially 100 mol%) with respect to all structures; an end of the main-chain has a C₁₈ alkyl group; and R⁴ is a structure containing no aromatic ring.

### [Example 1]

A non-woven fabric was obtained using a DMAc solution of 30 mass% resinA-1 in accordance with the above-mentioned "(1) Production of Non-woven Fabric". The fiber diameter was found to be 0.89 µm as measured in accordance with the method in the above-mentioned "(2) Measurement of Fiber Diameter". The non-woven fabric was heat-treated in accordance with the method in the above-mentioned "(3) Heat Resistance (Thermal Shrinkage Ratio) Evaluation", and the shrinkage ratio was determined. The thermal shrinkage ratio was found to be 1.2%. The non-woven fabric was evaluated for chemical resistance in accordance with the above-mentioned "(4) Chemical Resistance Evaluation", and no breakage was observed. In addition, a solution of 30 mass% resin A-1 was stored in accordance with the method described in the above-mentioned "(5) Preservation Stability Evaluation of Resin Solution", and checked for any change. No change of any kind was observed. Furthermore, the obtained non-woven fabric was used to measure, in accordance with the above-mentioned "(6) Cycle Characteristics Evaluation", the number of cycles taken until shorting occurred to the battery cell for evaluation, and no short circuit was observed even when the number of cycles exceeded 500.

### [Example 2]

A DMAc solution of 30 mass% resin A-1 was concentrated, and the obtained solid was added to dimethylsulfoxide (hereinafter referred to as DMSO, manufactured by Fujifilm Wako Pure Chemical Corporation) so that the solid content could be 30 mass%, to obtain a DMSO solution of 30 mass% resin A. A non-woven fabric was obtained using this solution in accordance with the above-mentioned "(1) Production of Non-woven Fabric". The fiber diameter was found to be 2.2 µm as measured in accordance with the method in the above-mentioned "(2) Measurement of Fiber Diameter". The non-woven fabric was heat-treated in accordance with the method in the above-mentioned "(3) Heat Resistance (Thermal Shrinkage Ratio) Evaluation", and the shrinkage ratio was determined. The thermal shrinkage ratio was found to be 2.1%. The non-woven fabric was evaluated for chemical resistance in accordance with the above-mentioned "(4) Chemical Resistance Evaluation", and no breakage was observed. In addition, a DMSO solution of 30 mass% resin A-1 was stored in accordance with the method described in the above-mentioned "(5) Preservation Stability Evaluation of Resin Solution", and checked for any change. No change of any kind was observed. Furthermore, the obtained non-woven fabric was used to measure, in accordance with the above-mentioned "(6) Cycle Characteristics Evaluation", the number of cycles taken until shorting occurred to the battery cell for evaluation, and no shorting was observed even when the number of cycles exceeded 500.

### [Example 3]

A DMAc solution of 30 mass% resin A was concentrated to obtain a DMAc solution of 70 mass% resin A. A non-woven fabric was obtained using this solution in accordance with the above-mentioned "(1) Production of Non-woven Fabric". The fiber diameter was found to be 1.5 µm as measured in accordance with the method in the above-mentioned "(2) Measurement of Fiber Diameter". The non-woven fabric was heat-treated in accordance with the method in the above-mentioned "(3) Heat Resistance (Thermal Shrinkage Ratio) Evaluation", and the shrinkage ratio was determined. The thermal shrinkage ratio was found to be 2.4%. The non-woven fabric was evaluated for chemical resistance in accordance with the above-mentioned "(4) Chemical Resistance Evaluation", and no breakage was observed.

In addition, a DMAc solution of 70 mass% resin A-1 was stored in accordance with the method described in the above-mentioned "(5) Preservation Stability Evaluation of Resin Solution", and checked for any change. After 45 days, some gelation was observed. Furthermore, the obtained non-woven fabric was used to measure, in accordance with the above-mentioned "(6) Cycle Characteristics Evaluation", the number of cycles taken until shorting occurred to the battery cell for evaluation, and no shorting was observed even when the number of cycles exceeded 500.

### [Example 4]

A DMAc solution of 30 mass% resin A-1 was diluted with DMAc to obtain a DMAc solution of 10 mass% resin A-1. A non-woven fabric was obtained using this solution in accordance with the above-mentioned "(1) Production of Non-woven Fabric". The fiber diameter was found to be 0.72 µm as measured in accordance with the method in the above-mentioned "(2) Measurement of Fiber Diameter". The non-woven fabric was heat-treated in accordance with the method in the above-mentioned "(3) Heat Resistance (Thermal Shrinkage Ratio) Evaluation", and the shrinkage ratio was determined. The thermal shrinkage ratio was found to be 3.5%. The non-woven fabric was evaluated for chemical resistance in accordance with the above-mentioned "(4) Chemical Resistance Evaluation", and no breakage was observed. In addition, a DMAc solution of 10 mass% resin A-1 was stored in accordance with the method described in the above-mentioned "(5) Preservation Stability Evaluation of Resin Solution", and checked for any change. No change of any kind was observed. Furthermore, the obtained non-woven fabric was used to measure, in accordance with the above-mentioned "(6) Cycle Characteristics Evaluation", the number of cycles taken until shorting occurred to the battery cell for evaluation, and no shorting was observed even when the number of cycles exceeded 500.

### [Example 5]

A non-woven fabric was produced in the same manner as in Example 1 except that the DMAc solution of 30 mass% resin A-1 was changed to a DMAc solution of 30 mass% resin A-2. The fiber diameter was calculated, and the heat resistance, chemical resistance, and solution preservation stability were evaluated. The fiber diameter was 0.93 µm, and the thermal shrinkage ratio was 1.4%. In the chemical resistance test, no breakage was observed. In the preservation stability evaluation of the solution, no change of any kind was observed. Furthermore, the obtained non-woven fabric was used in the cycle characteristics evaluation of the battery cell for evaluation, and no shorting was observed even when the number of cycles exceeded 500.

### [Comparative Example 1]

A non-woven fabric was produced in the same manner as in Example 1 except that the DMAc solution of 30 mass% resin A-1 was changed to a DMAc solution of 30 mass% resin A-3. The fiber diameter was calculated, and the heat resistance, chemical resistance, and solution preservation stability were evaluated. The fiber diameter was 3.5 µm, and the thermal shrinkage ratio was 0.82%. In the chemical resistance test, no breakage was observed. In the preservation stability evaluation of the solution, no change of any kind was observed. Furthermore, the obtained non-woven fabric was used in the cycle characteristics evaluation of the battery cell for evaluation, and the charge and discharge action was stopped owing to internal shorting when the number of cycles exceeded 160.

### [Comparative Example 2]

A non-woven fabric was produced in the same manner as in Example 1 except that the DMAc solution of 30 mass% resin A-1 was changed to a DMAc solution of 30 mass% resin B-1. The fiber diameter was calculated, and the heat resistance, chemical resistance, and solution preservation stability were evaluated. The fiber diameter was 0.86 µm, and the thermal shrinkage ratio was 45%. In the chemical resistance test, some breakage was observed. In the preservation stability evaluation of the solution, no change of any kind was observed. Furthermore, the obtained non-woven fabric was used in the cycle characteristics evaluation of the battery cell for evaluation, and the charge and discharge action was stopped owing to internal shorting when the number of cycles exceeded 250.

### [Examples 6 to 30 and Comparative Examples 3 to 5]

A non-woven fabric was produced in the same manner as in Example 1 except that the resin solutions to be used were changed as per Table 1. The fiber diameter was calculated, and the heat resistance, chemical resistance, solution preservation stability, and the cycle characteristics of a battery cell for evaluation were evaluated.

The evaluation results in Examples 1 to 30 and Comparative Examples 1 to 5 are shown in Table 1. In this regard, the values in the "cycle characteristics" column represent as follows: >500 means that no shorting was observed even when the number of cycles exceeded 500; and the values other than >500 mean that the charge and discharge action was stopped owing to internal shorting when the number of cycles exceeded the value.

**[Table 1]**

| | | Solution | | | Non-woven Fabric | | | Cell |
|---|---|---|---|---|---|---|---|---|
| | | Solvent | Solute Content | Preservation Stability. | Fiber Diameter | Thermal Shrinkage Ratio | Chemical Resistance | Cycle Characteristics |
| | | | mass% | | µm | % | | Number of Cycles |
| Example 1 | Resin A-1 | DMAc | 30 | good | 0.89 | 1.2 | good | >500 |
| Example 2 | Resin A-1 | DMSO | 30 | good | 2.2 | 2.1 | good | >500 |
| Example 3 | Resin A-1 | DMAc | 70 | gelation (45 days) | 1.5 | 2.4 | good | >500 |
| Example 4 | Resin A-1 | DMAc | 10 | good | 0.72 | 3.5 | good | >500 |
| Example 5 | Resin A-2 | DMAc | 30 | good | 0.93 | 1.4 | good | >500 |
| Comparative Example 1 | ResinA-3 | DMAc | 30 | good | 3.5 | 0.82 | good | 160 |
| Comparative Example 2 | Resin B-1 | DMAc | 30 | good | 0.86 | 45 | not good | 250 |
| Example 6 | Resin A-4 | DMAc | 30 | good | 0.90 | 0.9 | good | >500 |
| Example 7 | Resin A-5 | DMAc | 30 | good | 0.91 | 1.2 | good | >500 |
| Example 8 | Resin A-6 | DMAc | 30 | turbidity (90 days) | 0.82 | 1.7 | good | >500 |
| Example 9 | Resin A-7 | DMAc | 30 | turbidity (90 days) | 0.86 | 1.6 | good | >500 |
| Example 10 | Resin A-8 | DMAc | 30 | good | 0.84 | 8.8 | good | 420 |
| Example 11 | Resin A-9 | DMAc | 30 | good | 1.4 | 0.74 | good | 310 |
| Example 12 | Resin A-10 | DMAc | 30 | good | 1.3 | 2.3 | good | 450 |
| Example 13 | Resin A-11 | DMAc | 30 | good | 0.87 | 4.2 | good | >500 |
| Example 14 | Resin A-12 | DMAc | 30 | precipitation (45 days) | 1.9 | 1.5 | good | >500 |
| Example 15 | Resin A-13 | DMAc | 30 | precipitation (60 days) | 1.7 | 1.6 | good | >500 |
| Example 16 | Resin C-1 | DMAc | 30 | good | 0.85 | 1.1 | not good | >500 |
| Comparative Example 3 | Resin C-2 | DMAc | 30 | good | 3.2 | 0.9 | not good | 190 |
| Example 17 | Resin C-3 | DMAc | 30 | good | 0.88 | 7.6 | not good | >500 |
| Example 18 | Resin C-4 | DMAc | 30 | good | 1.5 | 0.68 | not good | 400 |
| Example 19 | Resin C-5 | DMAc | 30 | good | 1.2 | 2 | not good | 480 |
| Example 20 | Resin C-6 | DMAc | 30 | good | 0.88 | 5.1 | not good | >500 |
| Example 21 | Resin C-7 | DMAc | 30 | precipitation (45 days) | 2.0 | 1.1 | not good | >500 |
| Example 22 | Resin C-8 | DMAc | 30 | precipitation (60 days) | 1.8 | 0.95 | not good | >500 |
| Example 23 | Resin D-1 | NMP | 30 | good | 0.91 | 1.5 | good | >500 |
| Example 24 | Resin D-2 | NMP | 30 | good | 0.82 | 6.6 | not good | >500 |
| Comparative Example 4 | Resin D-3 | NMP | 30 | good | 5.5 | 0.96 | good | 90 |
| Example 25 | Resin D-4 | NMP | 30 | precipitation (45 days) | 2.1 | 0.84 | good | >500 |
| Example 26 | Resin D-5 | NMP | 30 | good | 0.94 | 2.8 | good | >500 |
| Example 27 | Resin E-1 | DMAc | 30 | good | 0.86 | 1.3 | good | >500 |
| Comparative Example 5 | Resin E-2 | DMAc | 30 | good | 4.8 | 1.1 | good | 120 |
| Example 28 | Resin E-3 | DMAc | 30 | good | 0.82 | 6.8 | not good | >500 |
| Example 29 | Resin E-4 | DMAc | 30 | precipitation (45 days) | 1.8 | 1.1 | good | >500 |
| Example 30 | Resin E-5 | DMAc | 30 | good | 0.92 | 3.1 | good | >500 |

The present application is based on Japanese Patent Application No. 2017-130082, filed on July 3, 2017, the contents of which are incorporated herein by reference.

## Claims

1. A resin, comprising a structure(s) represented by at least one selected from the group consisting of the following general formulae (1) to (3), wherein an end of the main-chain of said resin has at least one selected from the group consisting of alkyl groups having 10 or more carbon atoms and fluoroalkyl groups having 4 or more carbon atoms; 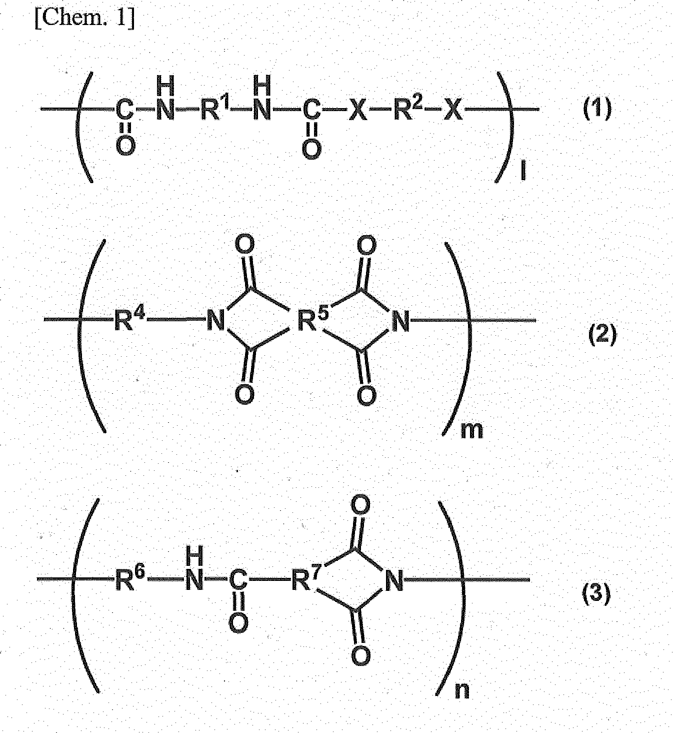
(wherein, in the general formula (1), X independently represents a single bond or -NR³-;
R¹ and R² independently represent a C4-C₃₀ bivalent organic group;
R³ represents a hydrogen atom or a C₁-C₁₀ monovalent organic group;
in the general formula (2), R⁴ represents a C₄-C₃₀ bivalent organic group;
R⁵ represents a C₄-C₃₀ tetravalent organic group;
in the general formula (3), R⁶ represents a C₄-C₃₀ bivalent organic group;
R⁷ represents a C₄-C₃₀ trivalent organic group;
1, m, and n are each an integer of 0 or greater with the proviso that l + m + n = 10 or greater; and
wherein the structures represented by the general formulae (1) to (3) do not necessarily need to be consecutively present).

2. The resin according to claim 1, comprising the structure(s) represented by the general formulae (1) to (3) in an amount of 50 mol% or more with respect to all structures contained in said resin.

3. The resin according to claim 1 or 2, comprising the structure represented by the general formula (1), wherein X is -NR³-.

4. The resin according to any one of claims 1 to 3, comprising the structure represented by the general formula (1), wherein R¹ is a C₄-C₃₀ bivalent aliphatic hydrocarbon group.

5. The resin according to claim 4, wherein, in R¹ in the general formula (1), the bivalent aliphatic hydrocarbon group is a C₄-C₃₀ bivalent cyclic aliphatic hydrocarbon group.

6. The resin according to any one of claims 1 to 5, wherein R² in the general formula (1) is a bivalent organic group containing an aromatic ring.

7. The resin according to claim 6, wherein, in R² in the general formula (1), said bivalent organic group containing an aromatic ring is a group represented by the general formula (4) or (5): 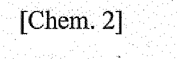 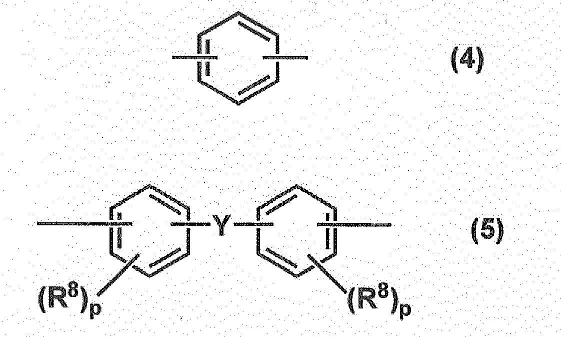
(wherein, in the general formula (5), Y represents a single bond, methylene group, isopropylidene group, hexafluoroisopropylidene group, carbonyl group, sulfonyl group, ether bond, or thioether bond;
R⁸ independently represents a hydroxyl group, carboxyl group, trifluoromethyl group, halogen atom, or C₁-C₁₀ hydrocarbon group; and
p independently represents an integer of 0 to 4.)

8. The resin according to claim 7, wherein, in the general formula (1), 50 mol% or more of R² is a group represented by the general formula (4) or (5).

9. The resin according to any one of claims 1 to 8, wherein R⁴ in the structure represented by the general formula (2) is a C₄-C₃₀ bivalent organic group containing an aromatic ring.

10. The resin according to claim 9, wherein, in R⁴ in the general formula (2), said C4-C₃₀ bivalent organic group containing an aromatic ring is a group represented by the general formula (6) or (7): 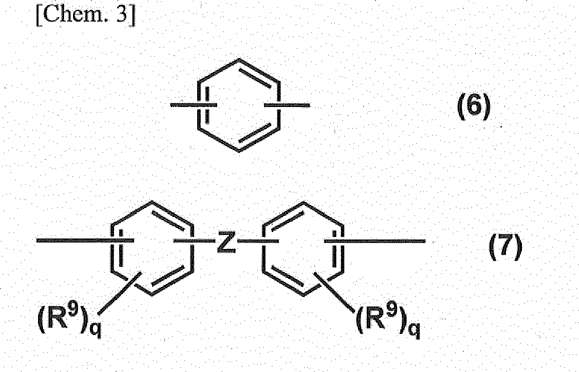
(wherein, in the general formula (7), Z represents a single bond, methylene group, isopropylidene group, hexafluoroisopropylidene group, carbonyl group, sulfonyl group, ether bond, or thioether bond;
R⁹ independently represents a hydroxyl group, carboxyl group, trifluoromethyl group, halogen atom, or C₁-C₁₀ hydrocarbon group; and
q independently represents an integer of 0 to 4.)

11. The resin according to any one of claims 1 to 10, wherein R⁶ in a structure represented by the general formula (3) is a C₄-C₃₀ bivalent organic group containing an aromatic ring.

12. The resin according to claim 11, wherein, in R⁶ in the general formula (3), said C₄-C₃₀ bivalent organic group containing an aromatic ring is a group represented by the general formula (8) or (9): 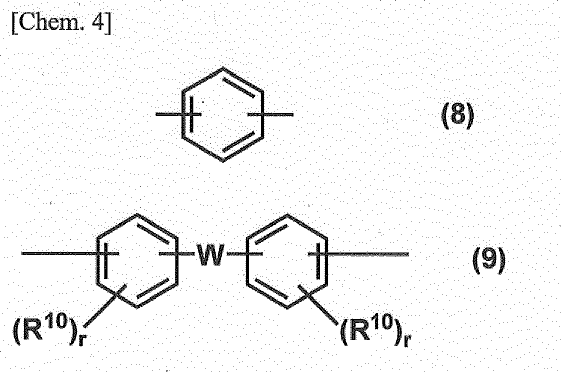
(wherein, in the general formula (9), W represents a single bond, methylene group, isopropylidene group, hexafluoroisopropylidene group, carbonyl group, sulfonyl group, ether bond, or thioether bond;
R¹⁰ independently represents a hydroxyl group, carboxyl group, trifluoromethyl group, halogen atom, or C₁-C₁₀ hydrocarbon group; and
r independently represents an integer of 0 to 4.)

13. A resin compound, comprising the resin according to any one of claims 1 to 12 and a solvent.

14. The resin compound according to claim 13, wherein said solvent comprises at least one selected from the group consisting of N-methylpyrrolidone, N,N-dimethylacetoamide, and N,N-dimethylisopropylamide.

15. The resin compound according to claim 13 or 14, containing said solvent in an amount of 40 mass% or more and 80 mass% or less with respect to the total mass of the compound.

16. The resin compound according to any one of claims 13 to 15, wherein said resin compound is used for non-woven fabrics.

17. A non-woven fabric, comprising the resin according to any one of claims 1 to 12.

18. A method of producing the non-woven fabric according to claim 17, comprising the step of forming a non-woven fabric by electrospinning the resin compound according to any one of claims 13 to 15.

19. A fiber product produced using the non-woven fabric according to claim 17.

20. A separator for electricity storage elements, which is produced using the non-woven fabric according to claim 17.

21. A secondary battery, having the separator according to claim 20.

22. An electric double layer capacitor, having the separator according to claim 20.
